(19) Europäisches Patentamt
European Patent Office
Office européen des brevets

(11) **EP 4 107 549 B1**

(12) **FASCICULE DE BREVET EUROPEEN**

(45) Date de publication et mention
de la délivrance du brevet:
**27.03.2024   Bulletin 2024/13**

(21) Numéro de dépôt: **21710547.7**

(22) Date de dépôt: **19.02.2021**

(51) Classification Internationale des Brevets (IPC):
**G01S 19/39** *(2010.01)*      **G01S 19/22** *(2010.01)*

(52) Classification Coopérative des Brevets (CPC):
**G01S 19/393; G01S 19/22**

(86) Numéro de dépôt international:
**PCT/FR2021/050301**

(87) Numéro de publication internationale:
**WO 2021/165626 (26.08.2021 Gazette 2021/34)**

(54) **PROCÉDÉ DE NAVIGATION D'UN PORTEUR À L'AIDE D'UN FILTRE DE KALMAN ESTIMANT UN ÉTAT DE NAVIGATION DU PORTEUR**

VERFAHREN ZUR NAVIGATION EINES TRÄGERS UNTER VERWENDUNG EINES KALMAN-FILTERS ZUR SCHÄTZUNG EINES NAVIGATIONSZUSTANDS DES TRÄGERS

METHOD FOR NAVIGATING A CARRIER USING A KALMAN FILTER ESTIMATING A NAVIGATION STATE OF THE CARRIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2020   FR 2001716**

(43) Date de publication de la demande:
**28.12.2022   Bulletin 2022/52**

(73) Titulaire: **Safran Electronics & Defense**
**75015 Paris (FR)**

(72) Inventeurs:
• **DAVAIN, Loïc**
**77550 MOISSY-CRAMAYEL (FR)**
• **HONORE, Kévin**
**77550 MOISSY-CRAMAYEL (FR)**
• **MISANDEAU, Clément**
**77550 MOISSY-CRAMAYEL (FR)**

(74) Mandataire: **Regimbeau**
**20, rue de Chazelles**
**75847 Paris Cedex 17 (FR)**

(56) Documents cités:
**US-A1- 2011 084 878**

• **FU-KUANG YEH ET AL: "Using Delta Range for Fault Detection/Exclusion on GPS Positioning", ASIAN JOURNAL OF CONTROL, vol. 14, no. 4, 28 octobre 2011 (2011-10-28), pages 936-946, XP055743039, ISSN: 1561-8625, DOI: 10.1002/asjc.457**
• **MANICKAM SASHIDHARAN ET AL: "Using Tactical and MEMS Grade INS to Protect Against GNSS Spoofing in Automotive Applications", GNSS 2016 - PROCEEDINGS OF THE 29TH INTERNATIONAL TECHNICAL MEETING OF THE SATELLITE DIVISION OF THE INSTITUTE OF NAVIGATION (ION GNSS+ 2016), THE INSTITUTE OF NAVIGATION, 8551 RIXLEW LANE SUITE 360 MANASSAS, VA 20109, USA, 16 septembre 2016 (2016-09-16), pages 2991-3001, XP056013880,**
• **ZHU ZHEN ET AL: "Demonstration of Integrity Protection for Multi-Constellation Carrier Phase Solution using RANSAC-based FDE", ITM 2019 - PROCEEDINGS OF THE 2019 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 31 janvier 2019 (2019-01-31), pages 744-761, XP056015244, DOI: 10.33012/2019.16682**

**Description**

**DOMAINE DE L'INVENTION**

La présente invention se rapporte au domaine des procédés de navigation utilisant un filtre de Kalman.

**ARRIERE PLAN**

Un filtre de Kalman est un estimateur récursif de données incluses dans un vecteur d'état et évoluant dans le temps.

Un tel filtre est couramment utilisé dans un contexte de navigation d'un porteur mobile dans l'espace. Dans ce cas, le vecteur d'état contient des données dynamiques du porteur (par exemple : position, vitesse, accélération, etc.). Cette méthode fonctionne par itérations successives, chaque itération prenant en entrée le vecteur d'état produit par l'itération précédente.

Chaque itération comprend deux étapes fondamentales : une étape de prédiction (également appelée étape de propagation), et une étape de mise à jour (également appelée étape de recalage dans certaines applications).

L'étape de mise à jour se fonde sur des observations fournies par des capteurs.

Il a notamment été proposé d'utiliser un récepteur GPS comme un tel capteur. Dans ce cas, le filtre de Kalman utilise comme observations des données issues de signaux de positionnement émis par différents satellites, puis reçus par le récepteur GPS.

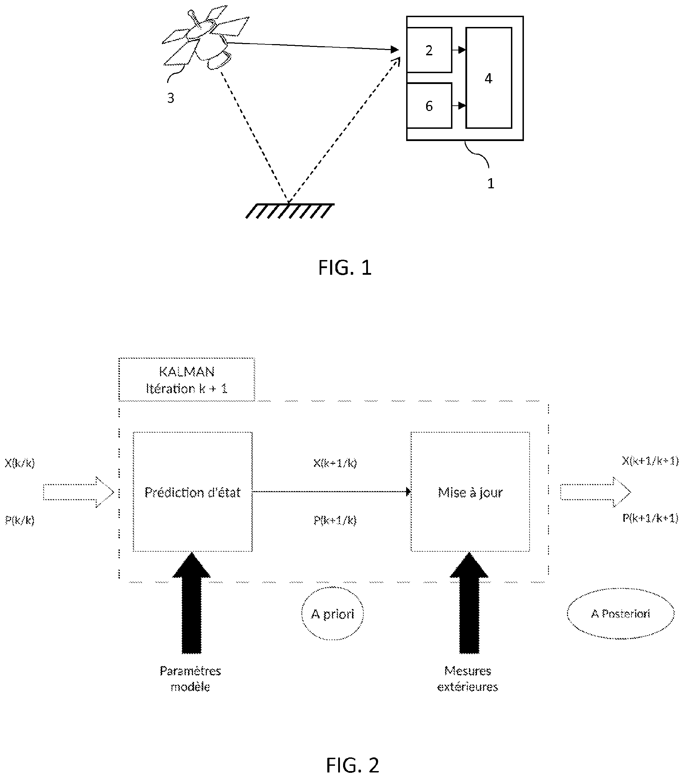

Un signal émis par un des satellites peut se réfléchir sur un obstacle avant de parvenir au porteur (comme l'indique la flèche en pointillé représentée en **figure 1**). Cet obstacle peut tout aussi bien être le sol, dit « Ground Bounce », un bâtiment, ou encore le fuselage de l'avion lui-même. On dit dans ce cas que le signal a subi un multi-trajet.

Or, un tel phénomène de multi-trajet introduit des erreurs dans les données utilisées comme observations par le filtre de Kalman. Ces erreurs affectent la précision de la mise à jour réalisée par le filtre de Kalman pour passer d'un vecteur d'état *a priori* à un vecteur d'état *a posteriori.*

Les documents US 2011/084878 A1 (RILEY WYATT THOMAS [US] ET AL - 14 avril 2011 et "Using Delta Range for Fault Detection/Exclusion on GPS Positioning" (FU-KUANG YEH ET AL - 28 octobre 2011) représentent l'art antérieur.

**EXPOSE DE L'INVENTION**

Un but de l'invention est d'estimer l'état de navigation d'un porteur sur la base de données émanant de satellites, d'une manière qui soit plus robuste à des erreurs.

Il est à cet effet proposé, selon un premier aspect, un procédé de navigation d'un porteur à l'aide d'un filtre de Kalman estimant un état de navigation du porteur, le procédé comprenant des étapes de :

- obtention d'un delta range mesuré entre le porteur et un satellite et d'une autre donnée cinématique mesurée associée au satellite, à partir d'un signal de positionnement émis par le satellite puis reçu par le porteur,
- génération d'un delta range estimé entre le porteur et le satellite, à partir de données de position du porteur et du satellite contenues dans l'état de navigation du porteur,
- calcul d'une innovation en delta range associée au satellite, à l'aide du delta range estimé et du delta range mesuré,
- test sur l'innovation en delta range produisant un résultat de test indiquant si le signal de positionnement a suivi un multi-trajet ou non,
- utilisation de la donnée cinématique mesurée comme observation par le filtre de Kalman pour mettre à jour l'état de navigation du porteur, à condition que le résultat de test indique que le signal de positionnement n'a pas suivi un multi-trajet.

Le procédé selon le premier aspect peut également comprendre les caractéristiques optionelles suivantes, prises seules ou combinées entre elles lorsque cela est techniquement possible.

De préférence, la donnée cinématique associée au satellite est une pseudo distance entre le porteur et le satellite.

De préférence, le delta range mesuré n'est pas utilisé par le filtre de Kalman pour mettre à jour l'état de navigation du porteur.

De préférence, le procédé comprend en outre les étapes de :

- calcul d'une deuxième innovation associée au satellite, la deuxième innovation étant relative à la donnée cinématique mesurée,

- test sur la deuxième innovation associée au satellite produisant un deuxième résultat de test indiquant un niveau de vraisemblance de la donnée cinématique mesurée, le deuxième résultat de test conditionnant également l'utilisation de la donnée cinématique mesurée par le filtre de Kalman pour mettre à jour l'état de navigation du porteur.

De préférence, le test sur la deuxième innovation associée au satellite, voire le calcul de la deuxième innovation, n'est mis en oeuvre qu'à condition que le résultat de test produit par le test sur l'innovation en delta range indique que le signal de positionnement n'a pas suivi un multi-trajet.

De préférence, le test sur l'innovation en delta range comprend des étapes de :

- calcul d'un terme dépendant d'un écart entre l'innovation en delta range associée au satellite et une covariance de l'innovation en delta range associée au satellite, et
- comparaison entre le terme calculé et un seuil prédéfini, le résultat de test étant fonction de la comparaison.

De préférence, la génération du delta range estimé comprend des étapes de :

- calcul d'une distance entre le porteur et le satellite à un instant t, à partir de données de position du porteur et du satellite contenues dans un état de navigation du porteur associé à l'instant t,
- prédiction inverse par le filtre de Kalman à partir de l'état de navigation du porteur à l'instant t, de sorte à obtenir un état de navigation du porteur associé à l'instant $t - \Delta T$,
- calcul d'une distance entre le porteur et le satellite à un instant $t - \Delta T$, à partir de données de position du porteur et du satellite contenues dans l'état de navigation du porteur associé à l'instant $t - \Delta T$,
- calcul d'un écart entre la distance entre le porteur et le satellite à l'instant t, et la distance entre le porteur et le satellite à l'instant $t - \Delta T$.

De préférence, le filtre de Kalman met en oeuvre une hybridation serrée inertielle/satellite. Il est également proposé, selon un deuxième aspect, un produit programme d'ordinateur comprenant des instructions de code de programme pour l'exécution des étapes du procédé selon le premier aspect, lorsque ce programme est exécuté par un ordinateur.

Il est encore proposé, selon un troisième aspect, un système de navigation comprenant :

- une unité de traitement configuré pour exécuter le programme selon le deuxième aspect,
- un récepteur configuré pour recevoir le signal de positionnement.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un système de navigation selon un mode de réalisation.
La figure 2 est un schéma bloc décrivant le principe général de fonctionnement d'un filtre de Kalman.
La figure 3 est un organigramme d'étapes d'un procédé de navigation selon un mode de réalisation.

Sur l'ensemble des figures, les éléments similaires portent des références identiques.

## DESCRIPTION DETAILLEE DE L'INVENTION

### Système de navigation

En référence à la **figure 1**, un système de navigation 1 d'un porteur mobile dans l'espace comprend un récepteur 2 et une unité de traitement 4.

Le porteur est quelconque : il peut s'agit d'un véhicule terrestre, un navire ou aéronef.

Le récepteur 2 est adapté pour recevoir et traiter des signaux de positionnement préalablement émis par des satellites 3 organisés en constellation (GPS, GALILEO, etc.). Le récepteur 2 est connu en lui-même.

Le récepteur 2 comprend typiquement au moins une antenne pour recevoir les signaux, et une chaîne de traitement de ces signaux fonctionnant en trois phases : une phase d'acquisition, une phase de poursuite en erreur de code (DLL), et une phase de poursuite en erreur de phase (PLL). Cette chaîne de traitement comprend notamment un filtre de boucle et utilise un signal de réplique qui est corrélé au signal reçu.

L'unité de traitement 4 est configuré pour mettre en oeuvre un procédé de navigation du porteur utilisant un filtre de Kalman.

L'unité de traitement 4 comprend à cet effet au moins un processeur configuré pour exécuter un programme comprenant des instructions de code pour la mise en oeuvre du procédé de navigation.

Le système de navigation comprend par ailleurs une unité de mesure inertielle 6 configurée pour fournir des données inertielles du porteur à l'unité de traitement 4. L'unité de mesure inertielle 6 est conventionnelle : elle comprend des gyromètres et des accéléromètres (typiquement trois de chaque type).

### Discussion sur la forme des signaux reçus et les notions de delta range et de pseudodistance

Un signal reçu par le récepteur 2 est un signal C/A destinés aux civils sur la bande de fréquence L1 = 1575.42 MHz. Chaque signal est codé par un code PRN, et comporte un échantillon d'informations. Plus particulièrement, ces différentes composantes du signal sont caractérisées comme suit.

Le code PRN est défini par une longueur de code de 1023 bits (chips), à une fréquence de 1.023 Mcps, et chaque bit modulé par une forme d'onde rectangulaire. La durée d'un code PRN est donc de 1ms. Cette période est notée $T_R$.

Les bits d'information sont périodiques et modulés par une forme d'onde rectangulaire.

La forme du signal tel qu'émis par un satellite est la suivante :

$$s(t) = A * d(t) * c(t) * \cos(2\pi f_{L1}t)$$

Avec :

. A l'amplitude du signal
. d(t) l'information transportée par le signal
. c(t) le code PRN
. $f_{L1}$ la fréquence de la bande L1, fréquence de la porteuse

Le signal correspondant reçu par le récepteur 2 est le suivant :

$$s_R(t) = A * d(t - \tau) * c(t - \tau) * \cos(2\pi f_{L1}t + \varphi)$$

Avec :

. $\tau$ le délai de propagation de l'onde
. $\varphi$ la phase du signal dépendant du décalage doppler et du délai de propagation de l'onde En vue de calculer la distance entre l'antenne de réception et le satellite 3, le délai doit être estimé. Cette estimation de délai se fait souvent sur le code PRN. Cependant ce délai caractérise le chemin de l'onde mais est également affecté par de multiples erreurs telles que les erreurs ionosphériques, les erreurs troposphériques, les multi-trajets, les erreurs de mesures, les dérives d'horloge ou encore du bruit thermique. Ainsi les distances résultantes du calcul de ces délais sont des distances vraies ajoutées à de multiples erreurs et sont ainsi appelées « pseudodistances ».

Une pseudodistance peut être déterminée grâce à la composante PRN du signal ou grâce à la phase du signal. Est appelée :

. Pseudodistance de code, la mesure suivante :

$$P_c^i(k) = \rho^i(k) + c\left(\Delta t_u(k) - \Delta t^i(k)\right) + d_I^i(k) + d_T^i(k) + D_{MULT}^i(k) + n^i(k) + b_P^i(k)$$

. Pseudodistance de phase, la mesure :

$$\varphi_c^i(k) = \rho^i(k) + c\left(\Delta t_u(k) - \Delta t^i(k)\right) - d_I^i(k) + d_T^i(k) + \varphi_{MULT}^i(k) + N^i \lambda^i + n^i(k) + b_\varphi^i(k)$$

Avec :

. $\rho^i(k)$ la distance réelle

. $c$ la vitesse de la lumière

. $\Delta t_u(k)$ la dérive de l'horloge du récepteur 2

. $\Delta t^i(k)$ la dérive de l'horloge satellite

. $d_I^i(k)$ le retard ionosphérique

. $d_T^i(k)$ le retard troposphérique

. $\varphi_{MULT}^i(k)$ et $D_{MULT}^i(k)$ les erreurs en phase et en code des multi-trajets

. $b_P^i(k)$ et $b_\varphi^i(k)$ les biais de code et de phase

. $n^i(k)$ le bruit

. $N^i \lambda^i$ représente l'ambigüité associée à la mesure de la phase ($\lambda^i$ est la longueur d'onde du signal)

Le récepteur 2 est ainsi configuré pour produire la pseudodistance entre le porteur et le satellite 3 d'un des deux types mentionnés ci-dessus, sur la base du signal qu'il reçoit de ce satellite 3, typiquement la pseudo-distance de code.

Par ailleurs, de manière connue en elle-même, un « delta range » entre le porteur et un satellite est une donnée étroitement liée à la fréquence Doppler d'un signal de positionnement reçu par le récepteur 2 et émanant du satellite 3 considéré. En réalité, un delta range est assimilable à un pseudo-distance de phase.

On a en effet :

$$ID(t) = \int_{t0}^{t} f_d(u)du$$

$$DR(t) = ID(t) - ID(t - \Delta T)$$

$$DR(t) = \int_{t-\Delta T}^{t} f_d(u)du$$

Dans les équations ci-dessus, $f_d$ est la fréquence Doppler du signal reçu par le récepteur 2, ID désigne la notion connue de « Doppler intégré », et $\Delta T$ est par ailleurs une période d'observation des delta-ranges. Par ailleurs, t0 est l'instant du début de la poursuite de phase.

Il existe par ailleurs une relation entre un delta range et la distance entre le porteur et le satellite 3 considéré, puisque :

$$DR(t) = \left(\frac{1}{\lambda}\right) * (\rho(t) - \rho(t - \Delta T))$$

Où $\rho(t) = |pos_{sat}(t) - pos_{ant}(t)|$ est la distance entre le satellite 3 et l'antenne au temps t et où $\lambda$ est la longueur d'onde du signal reçu par le récepteur 2.

**Principe général d'un filtre de Kalman**

En référence à la **figure 2**, le filtrage de Kalman est une méthode d'estimation récursive de données incluses dans un vecteur d'état et évoluant dans le temps (ce vecteur d'état est également appelé plus simplement « état »). Ces données sont des données dynamiques (position, vitesse, accélération, etc.). Cette méthode fonctionne par itérations successives, chaque itération prenant en entrée le vecteur d'état produit par l'itération précédente.

Chaque itération comprend deux étapes fondamentales : une étape de prédiction (également appelée étape de propagation), et une étape de mise à jour (également appelée étape de recalage dans certaines applications).

L'étape de prédiction transforme un vecteur d'état X(k/k) en un vecteur d'état *a priori* X(k+1/k) en utilisant un modèle de transition qui modélise le mouvement du porteur entre l'instant k et l'instant k+1.

Est également associé au vecteur d'état X(k/k) une matrice de covariance P(k/k). Cette matrice de covariance peut être vue comme représentative d'une incertitude sur l'estimation constituée par le vecteur d'état X(k/k). L'étape de prédiction transforme également la matrice de covariance P(k/k) en une matrice de covariance P(k+1/k), en se fondant sur le modèle de transition.

L'étape de mise à jour transforme le vecteur d'état *a priori* X(k+1/k) en un vecteur d'état a posteriori X(k+1/k+1) sur la base de mesures extérieures qui sont appelées « observations », et en combinant ces observations à un modèle d'observation qui modélise le bruit auquel ces observations sont sujettes. Au cours de l'étape de mise à jour, la matrice de covariance P(k+1/k) est transformée en une matrice de covariance P(k+1/k). Les observations apportent de l'information supplémentaire, améliorent donc l'estimation constituées par les données à priori X(k+1/k) et P(k+1/k). C'est ainsi qu'une plus grande confiance peut aussi être accordée à l'état X(k+1/k+1) *a posteriori.* Ceci peut se voir de manière imagée par une « diminution de P » entre l'état *a priori* et l'état *a posteriori.*

Le comportement temporel du vecteur d'état réel et de son observation est modélisé par les équations linéaires suivantes :

$$\begin{cases} X_{k+1} = F_k.X_k + G_k.U_k + W_k \\ \quad\quad Y_k = H_k.X_k + V_k \end{cases}$$

Avec :

. $X_k$ le vecteur d'état réel, que l'on cherche à estimer
. Yk le vecteur de mesure
. Fk la matrice de transition d'état
. Uk le vecteur de commande
. Gk la matrice de commande
. Hk la matrice d'observation
. Wk le bruit d'état (de covariance Qk = Cov(Wk))
. Vk le vecteur de bruit de mesure (de covariance Rk = Cov(Vk))

Dans ce cas alors les états a priori et a posteriori décrits précédemment s'obtiennent grâce aux relations suivantes :

Prédiction :

$$\hat{X}_{k+1|k} = F_k.\hat{X}_{k|k} + G_k.U_k$$

$$P_{k+1|k} = F_k.P_{k|k}.F_k^{\ T} + Q_k$$

Gain de Kalman :

$$K_{k+1} = P_{k+1|k}.H_{k+1}^{\ T} * \left( H_{k+1}.P_{k+1|k}.H_{k+1}^{\ T} + R_{k+1} \right)^{-1}$$

Mises à jour :

$$\hat{X}_{k+1|k+1} = \hat{X}_{k+1|k} + K_{k+1} * \left( Y_{k+1} - H_{k+1}.\hat{X}_{k+1|k} \right)$$

$$P_{k+1|k+1} = P_{k+1|k} - K_{k+1} * \left( H_{k+1}.P_{k+1|k} \right)$$

Avec : $\hat{X}_k$ le vecteur d'état estimé.

La plupart du temps le système n'est pas modélisable par des équations linéaires. Dans ce cas alors, le filtre de Kalman classique ne peut pas être appliqué. Un filtre de Kalman étendu (Extended Kalman Filter ou EKF) est alors utilisé. Dans ce cas la méthode du filtre de Kalman étendu propose de ramener le système au cas du filtre de Kalman classique en linéarisant et discrétisant les équations au voisinage de la solution estimée.

**Configuration du filtre de Kalman utilisé dans le système de navigation**

L'état de navigation estimé par le filtre de Kalman utilisé par le système 1 est un vecteur calculé à des instants $t_K$ (instants de traitement du filtre de navigation) comprenant les données suivantes :

- Des états de navigation tels que :

  - $\hat{r}_{ant}(t_K)$ la position estimée du porteur (plus précisément de l'antenne du récepteur 2) au temps $t_K$;
  - $\hat{v}_{ant}(t_K)$ la vitesse estimée du porteur à l'instant $t_K$
  - $\hat{\phi}_{ant}(t_K)$ l'attitude estimée du porteur à l'instant $t_K$

- Optionnellement, des états décrivant la précision et le comportement des moyens de navigation de référence, tels que, par exemple, pour une référence inertielle:

  - Les biais des accéléromètres
  - Les dérives des gyromètres

- Des états d'observation tels que :

  - $\hat{b}_t(t_K)$ le biais d'horloge estimé au temps $t_K$ ;
  - $\hat{b}_{Channel,i}(t_K)$ les biais canaux associés aux dfférents satellites.

Par ailleurs, le filtre de Kalman du système 1 utilise comme observations à un instant $t_K$ au moins deux données différentes pour chaque satellite de la constellation : un « delta range » entre le porteur et le satellite 3, et une autre donnée cinématique associée au satellite 3. Ces données d'observation sont souvent datées d'un instant différent de $t_K$. L'instant de datation des observations est noté $t_r$. Il s'agit de l'instant de réception des données de radionavigation.

Dans ce qui suit est décrit plus en détail un mode de réalisation dans lequel cette autre donnée cinématique est une pseudodistance entre le porteur et le satellite 3 considéré. Les données traitées comme observations par un filtre de Kalman conventionnel sont utilisées pour mettre à jour le vecteur d'état *a priori,* c'est-à-dire pour produire un vecteur d'état *a posteriori* tenant compte de telles observations.

De manière non conventionnelle, une pseudodistance entre le porteur et un satellite, ayant été mesurée par le récepteur 2, n'est pas forcément utilisée par le filtre de Kalman du système 1 pour mettre à jour le vecteur d'état *a priori*. On verra que cette utilisation pour la mise à jour est conditionnée au résultat d'un test d'innovation faisant intervenir un delta range entre le porteur et le même satellite, également mesuré par le récepteur 2.

Une autre spécificité (optionnelle) du filtre de Kalman utilisé par le système 1 est que le delta range mesuré par le récepteur 2 entre le porteur et un satellite donné n'est pas utilisé pour mettre en en oeuvre une telle mise à jour. Le rôle du delta range se borne alors à conditionner l'utilisation de la pseudodistance dans la mise à jour.

Le filtre de Kalman est par ailleurs configuré pour mettre en oeuvre une hybridation serrée satellite/inertielle. Autrement dit, le filtre de Kalman utilise non seulement des données émanant du récepteur 2, et en particulier des pseudodistances, mais également des données inertielles fournies par l'unité de mesure inertielle 6. Ces données inertielles permettent principalement d'entretenir la navigation qui sera recalée par les observations.

**Procédé de navigation mis en oeuvre à l'aide du filtre de Kalman**

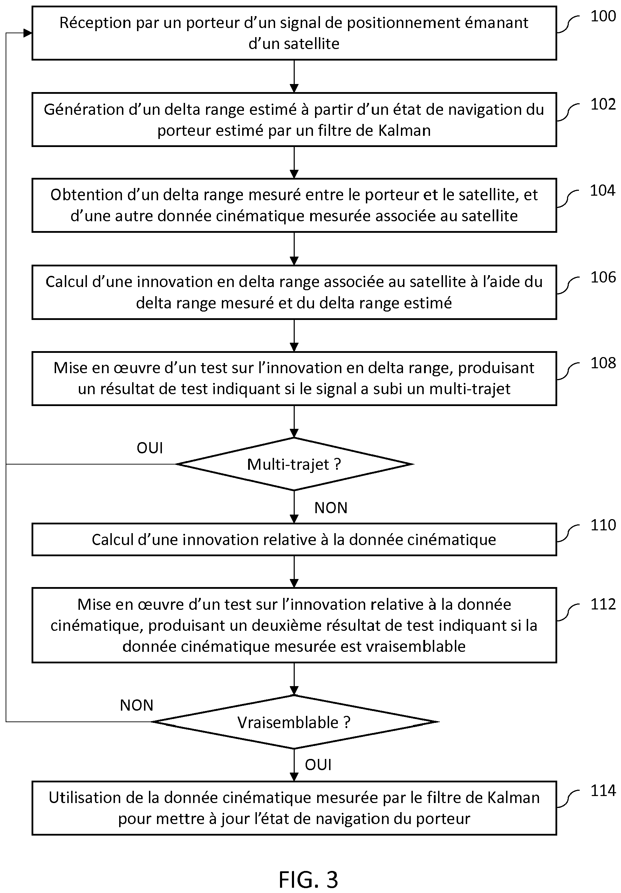

En référence à la **figure 3**, un procédé mis en oeuvre par le système comprend les étapes suivantes.

On suppose qu'un vecteur d'état *a priori* associé à l'instant $t_K$ a été produit au cours d'une mise en oeuvre par le filtre de Kalman de l'étape de prédiction discutée ci-dessus.

L'unité de traitement 4 génère un delta range estimé entre le porteur et le satellite 3 à l'instant $t_K$, à partir du contenu du vecteur d'état *a priori* associé à l'instant $t_K$ (étape 102). Sans perte de généralité, est supposé dans la suite que le filtre de navigation est synchrone des données de radionavigation. Les instants de datation de la navigation $t_K$ sont donc considérés comme égaux aux instants de réception des données d'observation $t_r$.

Considérant la position estimée du satellite au temps d'émission des signaux $\hat{r}_{sat}(t_e)$, le delta range estimé est calculé de la manière suivante :

$$DR_{est}(t_r) = 1/\lambda \left[ \sqrt{[\hat{r}_{ant}(t_r) - \hat{r}_{sat}(t_e)]^T [\hat{r}_{ant}(t_r) - \hat{r}_{sat}(t_e)]} - \right.$$

$$\left. \sqrt{[\hat{r}_{ant}(t_r - \Delta t) - \hat{r}_{sat}(t_e - \Delta t)]^T [\hat{r}_{ant}(t_r - \Delta t) - \hat{r}_{sat}(t_e - \Delta t)]} + \hat{b}_t(t_r) - \hat{b}_t(t_r - \Delta t) \right]$$

Ici, $\Delta t$ est ici la durée entre deux cycles de Kalman (deux recalages).

On constate ici que certains termes intervenant dans le calcul du delta range estimé concernent des données passées associées au temps passé $t_r$ - $\Delta T$.

Pour obtenir ces données passées, le vecteur d'état associé à l'instant $t_r$ fait l'objet d'une prédiction inverse par le filtre de Kalman, de manière à obtenir un vecteur d'état dans le passé à l'instant $t_r$ - $\Delta T$.

En reprenant les équations d'un filtre de Kalman **(Erreur ! Source du renvoi introuvable.),** l'équation de prédiction se note :

$$\hat{X}_{k+1|k} = \Phi_k . \hat{X}_{k|k}$$

La matrice $\Phi_k$ se note la matrice de transition. Ainsi, afin de passer d'un état $\hat{X}_{k+1|k}$ à un état $\hat{X}_{k|k}$, la prédiction inverse est réalisée par une multiplication par la matrice de transition inverse $\Phi_k^{-1}$ :

$$\hat{X}_{k|k} = \Phi_k^{-1} . \hat{X}_{k+1|k}$$

L'unité de traitement 4 obtient par ailleurs un delta range mesuré entre le porteur et le satellite 3 à l'instant t (étape 104). Le delta range mesuré est fourni par le récepteur 2, qui détermine cette mesure, selon une méthode connue, sur la base du signal de positionnement reçu par le récepteur 2 et émanant du satellite considéré. Le récepteur 2 se fonde notamment sur la phase du signal reçu pour déterminer ce delta range mesuré.

L'unité de traitement 4 obtient par ailleurs lors de l'étape 104 une pseudodistance mesuré entre le porteur et le satellite 3 à l'instant $t_r$. La pseudodistance mesurée est fourni par le récepteur 2, qui détermine cette mesure, selon une méthode connue, sur la base du signal de positionnement reçu par le récepteur 2 et émanant du satellite considéré.

A ce stade, le vecteur d'état *a priori* n'a pas encore fait l'objet d'une mise à jour par le filtre de Kalman, et deux observations ont été obtenues pour un satellite donné et pour un instant $t_r$ : un pseudo range entre le porteur et le satellite 3, et une pseudodistance entre le porteur et le satellite 3.

Avant de réaliser cette mise à jour, les étapes suivantes sont mises en oeuvre par l'unité de traitement 4.

Les composantes de la matrice d'observation H sont déterminées par l'unité de traitement 4 en calculant la Jacobienne du terme suivant :

$$Zp_{inno}(t_r) = DR_{mes}(t_r) - DR_{est}(t_r)$$

Une innovation en delta range associée au satellite 3 est ensuite calculée par l'unité de traitement 4 (étape 106). Cette innovation est calculée comme suit, à l'aide du vecteur d'état a priori dX, de la matrice d'observation H et du terme précédent $Zp_{inno}(t_r)$:

$$Inno = Zp_{inno}(t_r) - H(t_r) * dX(t_r)$$

$$Cov_{Inno} = H * P * H^T + R$$

Une covariance de l'innovation en delta range associée au même satellite que la donnée « Inno » est par ailleurs calculée par l'unité de traitement 4. La covariance de l'innovation est calculée comme suit :

$$Cov_{Inno} = H * P * H^T + R$$

Avec H étant la matrice d'observation, P la matrice de covariance d'état et R la covariance des erreurs d'observation.

L'unité de traitement 4 met en oeuvre un test sur l'innovation en delta range « Inno », afin de savoir si le signal reçu du satellite associé a subi un multi-trajet (étape 108).

Le test sur l'innovation 108 comprend le calcul par l'unité de traitement 4 d'un terme étant ou dépendant d'un écart entre l'innovation en delta range « Inno », et la covariance de l'innovation en delta range associée $Cov_{Inno}$.

Le terme obtenu est comparé à un seuil prédéfini.

L'unité de traitement 4 génère lors de l'étape de test 108 un résultat de test indiquant si le signal satellite reçu duquel est issu le delta range mesuré a subi un multi-trajet ou non.

Si le terme est supérieur au seuil prédéfini, cela signifie que l'innovation n'est pas cohérente avec la covariance associée. Le résultat de test généré par l'unité de traitement 4 est alors positif, dans le sens où ce résultat de test indique que le signal reçu duquel est issu le delta range mesuré a subi un multi-trajet.

Dans ce premier cas, la pseudodistance mesurée pour le même satellite n'est pas utilisée comme observation par le filtre de Kalman pour mettre à jour l'état de navigation du porteur, au cours de l'étape de mise à jour.

Si au contraire si le terme n'est pas supérieur au seuil prédéfini, il est considéré que l'innovation est cohérente avec la covariance associée. Le résultat de test généré par l'unité de traitement est alors négatif, dans le sens où ce résultat de test indique que le signal reçu duquel est issu le delta range mesuré n'a pas subi de multi-trajet.

Dans ce deuxième cas, l'unité de traitement calcule une deuxième innovation associée au satellite, relative à la pseudodistance mesurée (étape 110).

L'unité de traitement met ensuite en oeuvre un test sur la deuxième innovation (étape 112), suivant la même logique que celle décrite pour le test sur l'innovation en delta range (sauf que l'on travaille ici sur des pseudodistances). Ce test sur la deuxième innovation produit un deuxième résultat de test indiquant un niveau de vraisemblance de la pseudodistance mesurée. Ce test fait partie du fonctionnement connu des techniques de filtrage de Kalman. Si le deuxième résultat indique que la pseudodistance est vraisemblable, alors la pseudodistance mesurée est utilisée comme observation par le filtre de Kalman pour mettre à jour l'état de navigation du porteur, au cours de l'étape de mise à jour (étape 114). Sinon, la pseudodistance n'est pas utilisée de la sorte (comme dans le cas où le résultat de test sur l'innovation en delta range indique un multi-trajet).

En définitive, deux conditions doivent être satisfaite pour qu'une pseudodistance mesurée pour un satellite 3 soit utilisée par le filtre de Kalman comme observation pour mettre à jour un vecteur d'état *a priori* : la première condition résulte du test 108 sur l'innovation en delta range réalisée pour le satellite 3, et la deuxième condition résulte du test 112 sur l'innovation relative à la pseudodistance elle-même associée au même satellite 3.

Il est par ailleurs avantageux de ne mettre en oeuvre le test 112 sur l'innovation relative à la pseudodistance que si le résultat de test sur l'innovation en delta range s'avère être négatif, à fins d'économie de calcul.

Il est à noter que les étapes 100 à 114 sont répétées pour des signaux émanant de différents satellites. Par exemple, considérons la situation au cours de laquelle N satellites sont poursuivis. N pseudodistances et N delta ranges sont mesurés, N innovations en delta ranges sont calculées, chacune faisant l'objet d'un test.

Le procédé décrit ci-dessus peut fait l'objet d'autres variantes. La pseudodistance entre le porteur et un satellite, dont l'utilisation est conditionnée au cours de l'étape de mise à jour, peut être remplacé par une autre donnée cinématique associée au satellite.

## Revendications

1. Procédé de navigation d'un porteur à l'aide d'un filtre de Kalman estimant un état de navigation du porteur, le procédé mis en oeuvre par une unité de traitement (4) et comprenant des étapes de :

   - obtention (102) d'un delta range mesuré entre le porteur et un satellite et d'une autre donnée cinématique mesurée associée au satellite, à partir d'un signal de positionnement émis par le satellite puis reçu par le porteur,
   - génération (104) d'un delta range estimé entre le porteur et le satellite, à partir de données de position du porteur et du satellite contenues dans l'état de navigation du porteur,
   - calcul (106) d'une innovation en delta range associée au satellite, à l'aide du delta range estimé et du delta range mesuré,
   - test (108) sur l'innovation en delta range produisant un résultat de test indiquant si le signal de positionnement a suivi un multi-trajet ou non, le procédé étant **caractérisé en ce qu'**il comprend aussi l'étape suivante:
   - utilisation (114) de la donnée cinématique mesurée comme observation par le filtre de Kalman pour mettre à jour l'état de navigation du porteur, à condition que le résultat de test indique que le signal de positionnement n'a pas suivi un multi-trajet.

2. Procédé selon la revendication précédente, dans lequel la donnée cinématique associée au satellite est une pseudo distance entre le porteur et le satellite.

3. Procédé selon la revendication précédente, dans lequel le delta range mesuré n'est pas utilisé par le filtre de Kalman pour mettre à jour l'état de navigation du porteur.

4. Procédé selon l'une des revendications précédentes, comprenant en outre les étapes de :

   - calcul (110) d'une deuxième innovation associée au satellite, la deuxième innovation étant relative à la donnée cinématique mesurée,
   - test (112) sur la deuxième innovation associée au satellite produisant un deuxième résultat de test indiquant un niveau de vraisemblance de la donnée cinématique mesurée, le deuxième résultat de test conditionnant également l'utilisation (114) de la donnée cinématique mesurée par le filtre de Kalman pour mettre à jour l'état de navigation du porteur.

5. Procédé selon la revendication précédente, dans lequel le test (112) sur la deuxième innovation associée au satellite, voire le calcul de la deuxième innovation (110), n'est mis en oeuvre qu'à condition que le résultat de test produit par le test sur l'innovation en delta range indique que le signal de positionnement n'a pas suivi un multi-trajet.

6. Procédé selon l'une des revendications précédentes, dans lequel le test sur l'innovation en delta range (108) comprend des étapes de :

   - calcul d'un terme dépendant d'un écart entre l'innovation en delta range associée au satellite et une covariance de l'innovation en delta range associée au satellite, et
   - comparaison entre le terme calculé et un seuil prédéfini, le résultat de test étant fonction de la comparaison.

7. Procédé selon l'une des revendications précédentes, dans lequel la génération du delta range estimé (104) comprend des étapes de :

   - calcul d'une distance entre le porteur et le satellite à un instant t, à partir de données de position du porteur et du satellite contenues dans un état de navigation du porteur associé à l'instant t,
   - prédiction inverse par le filtre de Kalman à partir de l'état de navigation du porteur à l'instant t, de sorte à obtenir un état de navigation du porteur associé à l'instant $t - \Delta T$,
   - calcul d'une distance entre le porteur et le satellite à un instant $t - \Delta T$, à partir de données de position du porteur et du satellite contenues dans l'état de navigation du porteur associé à l'instant $t - \Delta T$,
   - calcul d'un écart entre la distance entre le porteur et le satellite à l'instant t, et la distance entre le porteur et le satellite à l'instant $t - \Delta T$.

8. Procédé selon l'une des revendications précédentes, dans lequel le filtre de Kalman met en oeuvre une hybridation serrée inertielle/satellite.

9. Produit programme d'ordinateur comprenant des instructions de code de programme pour l'exécution des étapes du procédé selon l'une des revendications précédentes, lorsque ce programme est exécuté par un ordinateur.

10. Système de navigation (1) comprenant :

    - une unité de traitement (4) configuré pour exécuter le programme selon la revendication précédente,
    - un récepteur (2) configuré pour recevoir le signal de positionnement.

**Patentansprüche**

1. Verfahren zur Navigation eines Trägers mit Hilfe eines Kalman-Filters zur Schätzung eines Navigationszustands des Trägers, wobei das Verfahren von einer Verarbeitungseinheit (4) durchgeführt wird und folgende Schritte umfasst:

   - Erhalten (102) eines Deltabereichs, gemessen zwischen dem Träger und einem Satelliten und einer anderen gemessenen, dem Satelliten zugeordneten kinematischen Angabe ausgehend von einem von dem Satelliten gesendeten und dann von dem Träger empfangenen Positionierungssignal,

- Erzeugen (104) eines geschätzten Deltabereichs zwischen dem Träger und dem Satelliten ausgehend von Positionsdaten des Trägers und des Satelliten, die im Navigationszustand des Trägers enthalten sind,
- Berechnen (106) einer dem Satelliten zugeordneten Deltabereichsinnovation mit Hilfe des geschätzten Deltabereichs und des gemessenen Deltabereichs,
- Testen (108) anhand der Deltabereichsinnovation, wobei ein Testergebnis erzeugt wird, das angibt, ob das Positionierungssignal einem Mehrfachpfad gefolgt ist oder nicht, wobei das Verfahren **dadurch gekennzeichnet ist, dass** es auch den folgenden Schritt umfasst:
- Verwenden (114) der gemessenen kinematischen Angabe als Beobachtung durch den Kalman-Filter, um den Navigationszustand des Trägers zu aktualisieren, sofern das Testergebnis angibt, dass das Positionierungssignal keinem Mehrfachpfad gefolgt ist.

2. Verfahren nach vorangehendem Anspruch, wobei die dem Satelliten zugeordnete kinematische Angabe ein Pseudoabstand zwischen dem Träger und dem Satelliten ist.

3. Verfahren nach vorangehendem Anspruch, wobei der gemessene Deltabereich vom Kalman-Filter nicht verwendet wird, um den Navigationszustand des Trägers zu aktualisieren.

4. Verfahren nach einem der vorangehenden Ansprüche, das ferner die folgenden Schritte umfasst:

- Berechnen (110) einer zweiten, dem Satelliten zugeordneten Innovation, wobei die zweite Innovation relativ zu der gemessenen kinematischen Angabe ist,
- Testen (112) anhand der zweiten, dem Satelliten zugeordneten Innovation, wobei ein zweites Testergebnis erzeugt wird, das ein Wahrscheinlichkeitsniveau der gemessenen kinematischen Angabe angibt, wobei das zweite Testergebnis ebenfalls die Verwendung (114) der gemessenen kinematischen Angabe durch den Kalman-Filter zur Aktualisierung des Navigationszustands des Trägers konditioniert.

5. Verfahren nach vorangehendem Anspruch, wobei der Test (112) anhand der zweiten, dem Satelliten zugeordneten Innovation bzw. die Berechnung der zweiten Innovation (110) nur dann durchgeführt wird, sofern das vom Deltabereichsinnovationstest erzeugte Testergebnis angibt, dass das Positionierungssignal keinem Mehrfachpfad gefolgt ist.

6. Verfahren nach einem der vorangehenden Ansprüche, wobei der Deltabereichsinnovationstest (108) folgende Schritte umfasst:

- Berechnen eines Terms, der von einer Abweichung zwischen der dem Satelliten zugeordneten Deltabereichsinnovation und einer dem Satelliten zugeordneten Deltabereichsinnovations-Kovarianz abhängt, und
- Vergleichen zwischen dem berechneten Term und einem vorbestimmten Grenzwert, wobei das Testergebnis von dem Vergleich abhängt.

7. Verfahren nach einem der vorangehenden Ansprüche, wobei die Erzeugung des geschätzten Deltabereichs (104) folgende Schritte umfasst:

- Berechnen eines Abstands zwischen dem Träger und dem Satelliten zu einem Zeitpunkt t ausgehend von Positionsdaten des Trägers und des Satelliten, die in einem dem Zeitpunkt t zugeordneten Navigationszustand des Trägers enthalten sind,
- inverse Vorhersage durch den Kalman-Filter ausgehend vom Navigationszustand des Trägers zum Zeitpunkt t, so dass man einen dem Zeitpunkt $t - \Delta T$ zugeordneten Navigationszustand des Trägers erhält,
- Berechnen eines Abstands zwischen dem Träger und dem Satelliten zu einem Zeitpunkt $t - \Delta T$ ausgehend von Positionsdaten des Trägers und des Satelliten, die im Navigationszustand des Trägers erhalten sind, der dem Zeitpunkt $t - \Delta T$ zugeordnet ist,
- Berechnen einer Abweichung zwischen dem Abstand zwischen dem Träger und dem Satelliten zum Zeitpunkt t und dem Abstand zwischen dem Träger und dem Satelliten zum Zeitpunkt $t - \Delta T$.

8. Verfahren nach einem der vorangehenden Ansprüche, wobei der Kalman-Filter eine enge Inertialhybridisierung/Satellit durchführt.

9. Rechnerprogrammprodukt, umfassend Programmcodebefehle für die Ausführung der Schritte des Verfahrens nach einem der vorangehenden Ansprüche, wenn dieses Programm von einem Rechner ausgeführt wird.

**10.** Navigationssystem (1), umfassend:

- eine Verarbeitungseinheit (1), die zur Ausführung des Programms nach vorangehendem Anspruch ausgelegt ist,
- einen Empfänger (2), der zum Empfang des Positionierungssignals ausgelegt ist.

**Claims**

**1.** A method of navigating a carrier using a Kalman filter to estimate a navigational state of the carrier, the method being performed by a processing unit (4) and comprising the steps of:

- obtaining (102) a delta range measured between the carrier and a satellite and another measured kinematic indication associated with the satellite from a positioning signal transmitted by the satellite and then received by the carrier,
- generating (104) an estimated delta range between the carrier and the satellite based on position data of the carrier and the satellite included in the navigation state of the carrier,
- calculating (106) a delta range innovation associated with the satellite using the estimated delta range and the measured delta range,
- testing (108) using the delta range innovation, wherein a test result is generated indicating whether or not the positioning signal has followed a multiple path, the method being **characterized in that** it also comprises the following step:
- Using (114) the measured kinematic information as an observation through the Kalman filter to update the navigation state of the carrier if the test result indicates that the positioning signal did not follow a multiple path.

**2.** the method according to the preceding claim, wherein the kinematic information associated with the satellite is a pseudo-distance between the carrier and the satellite.

**3.** the method according to the preceding claim, wherein the measured delta range is not used by the Kalman filter to update the navigation state of the wearer.

**4.** Method according to any one of the preceding claims, further comprising the following steps:

- calculating (110) a second innovation associated with the satellite, the second innovation being relative to the measured kinematic information,
- testing (112) using the second innovation associated with the satellite, generating a second test result indicative of a probability level of the measured kinematic indication, the second test result also conditioning the use (114) of the measured kinematic indication by the Kalman filter to update the navigation state of the carrier.

**5.** The method according to the preceding claim, wherein the test (112) is performed using the second innovation associated with the satellite or the calculation of the second innovation (110) only if the test result generated by the delta range innovation test indicates that the positioning signal has not followed a multiple path.

**6.** The method according to any one of the preceding claims, wherein the delta range innovation test (108) comprises the following steps:

- calculating a term depending on a deviation between the delta range innovation associated with the satellite and a delta range innovation covariance associated with the satellite, and
- comparison between the calculated term and a predetermined limit value, whereby the test result depends on the comparison.

**7.** A method according to any one of the preceding claims, wherein generating the estimated delta range (104) comprises the following steps:

- calculating a distance between the carrier and the satellite at a time t based on position data of the carrier and the satellite contained in a navigation state of the carrier associated with the time t,
- inverse prediction by the Kalman filter based on the navigation state of the carrier at time t, so that a navigation state of the carrier assigned to time $t - \Delta T$ *is* obtained,

- Calculating a distance between the carrier and the satellite at a time $t - \Delta T$ based on position data of the carrier and the satellite obtained in the navigation state of the carrier associated with the time $t - \Delta T$,
- Calculate a deviation between the distance between the carrier and the satellite at time t and the distance between the carrier and the satellite at time $t - \Delta T$.

8. The method according to any one of the preceding claims, wherein the Kalman filter performs narrow inertial hybridization/satellite.

9. a computer program product comprising program code instructions for carrying out the steps of the method according to any one of the preceding claims when said program is executed by a computer.

10. Navigation system (1), comprising:

- a processing unit (1) designed to execute the program according to the preceding claim,
- a receiver (2) designed to receive the positioning signal.

FIG. 1

FIG. 2

Réception par un porteur d'un signal de positionnement émanant d'un satellite — 100

Génération d'un delta range estimé à partir d'un état de navigation du porteur estimé par un filtre de Kalman — 102

Obtention d'un delta range mesuré entre le porteur et le satellite, et d'une autre donnée cinématique mesurée associée au satellite — 104

Calcul d'une innovation en delta range associée au satellite à l'aide du delta range mesuré et du delta range estimé — 106

Mise en œuvre d'un test sur l'innovation en delta range, produisant un résultat de test indiquant si le signal a subi un multi-trajet — 108

OUI — Multi-trajet ?

NON

Calcul d'une innovation relative à la donnée cinématique — 110

Mise en œuvre d'un test sur l'innovation relative à la donnée cinématique, produisant un deuxième résultat de test indiquant si la donnée cinématique mesurée est vraisemblable — 112

NON — Vraisemblable ?

OUI

Utilisation de la donnée cinématique mesurée par le filtre de Kalman pour mettre à jour l'état de navigation du porteur — 114

FIG. 3

**EP 4 107 549 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2011084878 A1, RILEY WYATT THOMAS